# EUROPÄISCHE PATENTSCHRIFT

(11) **EP 2 049 873 B1**
(45) Veröffentlichungstag und Bekanntmachung des Hinweises auf die Patenterteilung: **10.10.2012**
(21) Anmeldenummer: 07786122.7
(22) Anmeldetag: 17.07.2007
(51) Int. Cl.: G01C 21/20, G05D 1/02, G05D 1/10, B63G 8/14

(54) **VERFAHREN ZUR BESTIMMUNG EINES FAHRWEGS FÜR EIN UNTERWASSERFAHRZEUG**
METHOD FOR DETERMINING A ROUTE FOR AN UNDERWATER VEHICLE
PROCÉDÉ DE DÉTERMINATION D'UN PARCOURS POUR UN VÉHICULE SOUS-MARIN

(30) Priorität: 01.08.2006 DE 102006035878
(43) Veröffentlichungstag der Anmeldung: 22.04.2009
(73) Patentinhaber: ATLAS Elektronik GmbH, 28309 Bremen (DE)
(72) Erfinder: WOLTER, Nils, 28307 Bremen (DE); SCHNEIDER, Dietmar, 28816 Stuhr (DE)
(74) Vertreter: Wasiljeff, Johannes M.B.
(86) Internationale Anmeldenummer: PCT/EP2007/006322
(87) Internationale Veröffentlichungsnummer: WO 2008/014882

(56) Entgegenhaltungen:
- ARINAGA S ET AL: "A motion planning method for an AUV" 2. Juni 1996 (1996-06-02), PROCEEDINGS OF THE 1996 SYMPOSIUM ON AUTONOMOUS UNDERWATER VEHICLE TECHNOLOGY (AUV). MONTEREY, JUNE 2 - 6, 1996, PROCEEDINGS OF THE SYMPOSIUM ON AUTONOMOUS UNDERWATER VEHICLE TECHNOLOGY (AUV), NEW YORK, IEEE, US, PAGE(S) 477-484 , XP009091877 ISBN: 0-7803-3186-9 Zusammenfassung Seiten 478 - 480, Abschnitt "II. GLOBAL PATH PLANNING"; Abbildungen 1-7
- MOIZER A; PAGUREK B: "An onboard navigation system for autonomous underwater vehicles" 1987, PROCEEDINGS OF THE INTELLIGENT AUTONOMOUS SYSTEMS. AN INTERNATIONAL CONFERENCE - 8-11 DEC. 1986, AMSTERDAM, NETHERLANDS, PAGE(S) 449 - 458 , XP009091876 ISBN: 0-444-70168-0 Zusammenfassung Seite 455, Abschnitt "5.2 Path Planner Implementation"

## Beschreibung

Die Erfindung betrifft ein Verfahren zur Bestimmung eines Fahrweges für ein Unterwasserfahrzeug in einem Seegebiet zwischen einem Start- und einem Zielpunkt des Unterwasserfahrzeugs.

Ein solches Verfahren dient beispielsweise zum Erstellen eines Routenvorschlags und Festlegen einer gezielten Ausstoßrichtung für einen Unterwasserlaufkörper von einer Unterwasserplattform aus hin zu einem zuvor im Seegebiet georteten Zielobjekt, z.B. Mine, Pipeline, Fahrzeug u. dgl.. Dabei wird in der Regel lediglich der Ausstoßzeitpunkt, die Laufgeschwindigkeit des Unterwasserlaufkörpers und Kurs und Fahrgeschwindigkeit des Zielobjekts berücksichtigt und unterstellt, dass im Laufweg des Unterwasserlaufkörpers stets eine ausreichende Wassertiefe vorhanden ist. Sind aber im Seegebiet Untiefen, Felsen, Inselgebilde und dgl. vorhanden, und reichen diese bis in den vorgeplanten Fahrweg hinein, so ist der Unterwasserlaufkörper nicht in der Lage, diese Bereiche zu umfahren, läuft dort auf und kann nicht zum Zielobjekt gelangen.

Ähnliche Probleme treten auch bei der Wegeplanung für U-Boote und unbemannte Unterwasserfahrzeuge auf, wenn sie unterwegs aufgrund der Erfassung von Hindernissen mittels Sonaranlagen diese nur unmittelbar umfahren können. Die zurückgelegte Fahrstrecke ist aufgrund der notwendigen Ausweichmanöver sehr viel länger als erforderlich, was Zeitverlust und erhöhten Treibstoffverbrauch mit sich bringt.

Die Veröffentlichung "A motion planning method for an AUV" von Arinaga S et al (02.06.1996, Proceedings Of The 1996 Symposium On Autonomous Underwater Vehicle Technology (AUV), Monterey, 02-06.06.1996, New York, IEEE, US, Seiten 477 - 484, XP009091877, ISBN: 0-7803-3186-9) offenbart ein Verfahren, mittels dessen für ein Unterwasserfahrzeug in einem durch ein Netz aus durch Knoten miteinander verknüpften Kanten repräsentierten Seegebiet ein Fahrweg zwischen einem Start- und einem Zielknoten bestimmt wird. Den Kanten sind dabei Gewichte zugewiesen, die einer Kostenfunktion entsprechen, und der Fahrweg wird so bestimmt, dass die Summe der den Kanten des Fahrwegs entsprechenden Kosten minimal ist.

Der Erfindung liegt die Aufgabe zugrunde, ein Verfahren zur Bestimmung des Fahrwegs eines Unterwasserfahrzeugs zwischen Start- und Zielpunkt so zu verbessern, dass unter Berücksichtigung geographischer Gegebenheiten im Seegebiet und der gewünschten Tauchtiefe des Unterwasserfahrzeugs während der Fahrt ein optimierter Fahrweg ermittelt wird, der eine kürzestmögliche Fahrstrecke ergibt.

Die Aufgabe ist erfindungsgemäß durch die Merkmale im Anspruch 1 gelöst.

Das erfindungsgemäße Verfahren mit den Merkmalen des. Anspruchs 1 hat den Vorteil, dass durch die Vermaschung des Start- und Zielpunkt des Unterwasserfahrzeugs umfassenden Seegebiets, durch die Zuordnung von Gewichtungen zu den Kanten der Maschen und durch die Ermittlung der Knotengewichtungen ein ausgewählter Fahrweg für das Unterwasserfahrzeug erhalten wird, der unter Umgehung von Untiefen, Inseln, Landzungen, Sperrgebieten und besonderen Gefährdungsgebieten für das Unterwasserfahrzeug die kürzeste Strecke zum Zielpunkt repräsentiert. Die Gewichtung der Kanten, die über die Auswahl des jeweiligen Fahrabschnitts entscheidet, wird dabei anhand der gewünschten Lauftiefe des Unterwasserfahrzeugs unter der Wasseroberfläche und den in der Seekarte verzeichneten Tiefenangaben vorgenommen und die Werte der Gewichtung um so höher angesetzt, je kritischer das Passieren dieses Bereichs für das Unterwasserfahrzeug ist.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer vorteilhaften Ausführungsform der Erfindung wird zur Ableitung der den Kanten zugeordneten Gewichtungen ein Vorgabewert für eine gewünschte Lauftiefe des Unterwasserfahrzeugs mit den Tiefenangaben in der Seekarte verglichen und bei Unterschreitung der jeweiligen Tiefenangabe eine geringe Gewichtung und bei Überschreiten der jeweiligen Tiefenangabe eine hohe Gewichtung der jeweiligen Kante zugeordnet. Bei in der Seekarte verzeichneten, gegen das Befahren gesperrten Schutz- und Gefahrenzonen, wird den im Bereich dieser Zonen liegenden Kanten eine höhere Gewichtung zugeordnet. Kanten in Bereichen, die von dem Unterwasserfahrzeug möglichst nicht durchlaufen werden sollen, weil hier ein gewisses Schadensrisiko besteht, aber von dem Unterwasserfahrzeug aufgrund der ausreichenden Wassertiefe mangels anderer Alternativen passiert werden können, werden mit einer mittleren Gewichtung ausgewiesen.

Die Erfindung ist anhand von in der Zeichnung dargestellten Ausführungsbeispielen im folgenden näher beschrieben. Es zeigen in schematischer Darstellung:
- Fig. 1: eine Draufsicht eines einem Ausschnitt eines Seegebiets zugeordneten Maschennetzes mit die Maschen begrenzenden Kanten und die Kanten verknüpfenden Knoten,
- Fig. 2: jeweils zwei Listen für die
- bis 5: Knoteneintragungen bei der Fahrwegsplanung zur Illustration des Verfahrens in vier Ausführungsbeispielen.

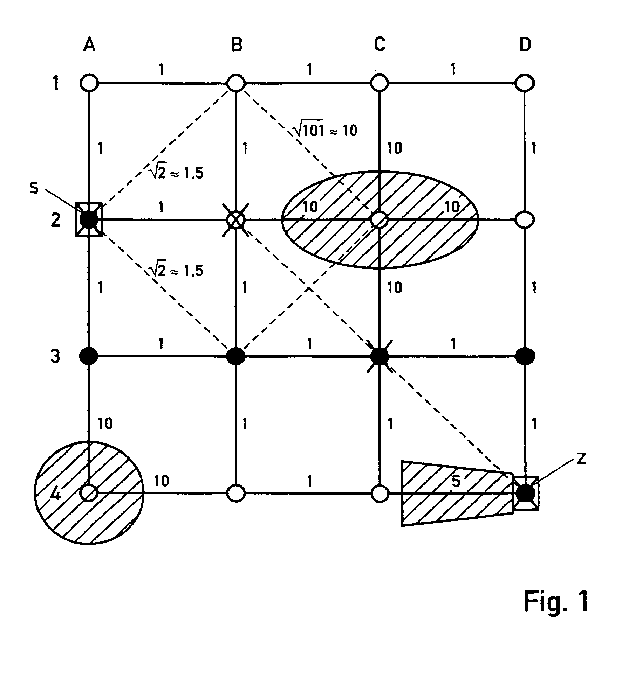

Bei dem Verfahren zur Bestimmung oder Planung eines Fahrweges für ein Unterwasserfahrzeug in einem Seegebiet zwischen einem Start- und einem Zielpunkt des Unterwasserfahrzeugs wird eine Seekarte verwendet, die als sog. Bitmap kartographisch verzeichnete Tiefenangaben enthält. Einem Ausschnitt der Seekarte, der den Startpunkt S und den Zielpunkt Z für das Unterwasserfahrzeug erfasst, wird eine Matrix oder ein Maschennetz zugeordnet, in dem die Maschen durch Maschenkanten - im folgenden kurz Kanten genannt - eingegrenzt sind und an den Kantenenden durch Knoten miteinander verknüpft sind. Ein solches Maschennetz wird dem Seekartenausschnitt so zugeordnet, dass im Startpunkt S und im Zielpunkt Z jeweils ein Knoten, der sog. Start- bzw. Zielknoten, liegt. In Fig. 1 ist ein solches Maschennetz mit Knoten und Kanten dargestellt, wobei die Knoten matrixartig angeordnet und ihre Positionen (Pos.) durch die Spaltenbezeichnungen A, B, C, D und die Zeilenbezeichnung 1, 2, 3, 4 gekennzeichnet sind. So hat beispielhaft der Knoten im oberen, linken Eckpunkt des Maschennetzes bzw. der Matrix die Position A1 und der Knoten im unteren, rechten Eckpunkt des Maschennetzes die Position D4 und ist nachfolgend jeweils mit seiner Position gekennzeichnet. Jeder zu einem Knoten führenden Kante wird eine Gewichtung zugewiesen, die aus einer Tiefenangabe abgeleitet ist, die in der Seekarte zwischen den durch die Kante verbundenen beiden Knoten verzeichnet ist. Hierzu wird ein Vorgabewert für eine gewünschte Lauftiefe des Unterwasserfahrzeugs mit der im Bereich der Kante in der Seekarte verzeichneten Tiefenangabe verglichen. Unterschreitet der Vorgabewert die Tiefenangabe, so wird der Kante eine geringe Gewichtung, im Ausführungsbeispiel "1", zugewiesen. Überschreitet der Vorgabewert die Tiefenangabe, so wird der Kante eine hohe Gewichtung, im Ausführungsbeispiel "10", zugewiesen. In der Seekarte sind weiterhin auch Schutz- und Gefahrenzonen ausgewiesen, die gegen das Befahren gesperrt sind. Kanten, die in solchen Zonen liegen, werden - unabhängig von der vorhandenen Wassertiefe - eine hohe Gewichtung, im Ausführungsbeispiel "10", zugewiesen. Bei der Kantengewichtung werden auch Risikogebiete berücksichtigt, in welchen das Unterwasserfahrzeug einem kalkulierbaren Risiko ausgesetzt ist. Solche Risikogebiete sind beispielsweise ein von einem Detektionssonar eines Ziels erfasster Seegebietsabschnitt. Da ein solcher Risikobereich möglichst vom Unterwasserfahrzeug vermieden werden soll, um z.B. einer Entdeckung zu entgehen, aber als eine mögliche Wegoption in Frage kommt, werden Kanten, die in einem solchen Risikobereich liegen, mit einer mittleren Gewichtung, im Ausführungsbeispiel "5", belegt. In Fig. 1 sind die angesprochenen Gebiete, in welchen die Kanten eine von "1" abweichende Gewichtung aufweisen, schraffiert dargestellt.

Mit einem solchermaßen aufgebauten Maschennetz wird die Fahrwegplanung für das Unterwasserfahrzeug vom Startpunkt S zu dem Zielpunkt Z wie folgt durchgeführt:

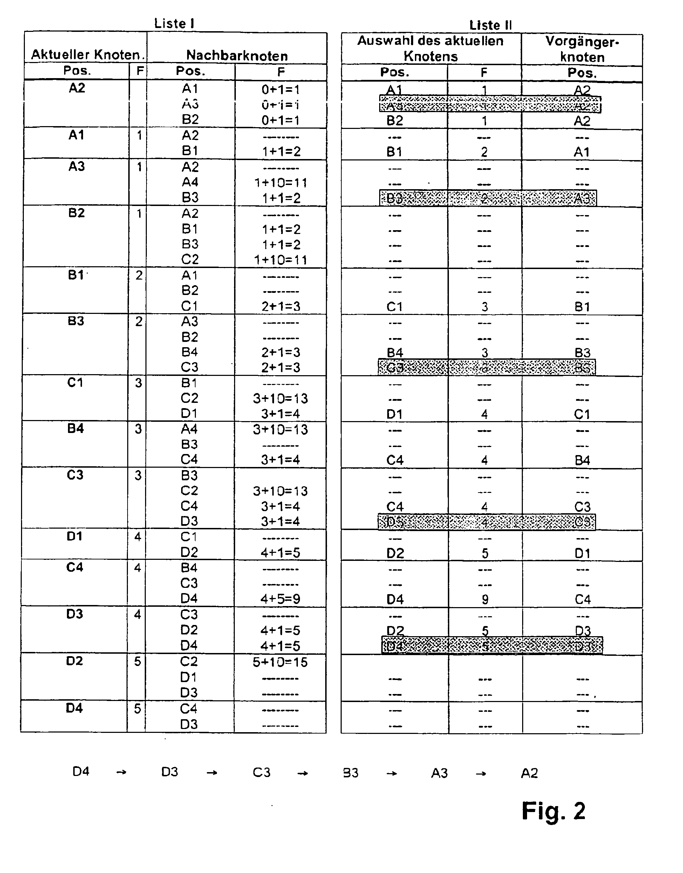

Ausgehend von dem im Startpunkt S liegenden Knoten, dem sog. Startknoten A2, als ein zuerst betrachteter aktueller Knoten werden den Nachbarknoten des jeweils aktuellen Knotens, z.B. des Startknotens A2, jeweils eine aus der Gewichtung der Kanten abgeleitete Gesamtgewichtung F zugeordnet. Der Nachbarknoten mit der kleinsten Gesamtgewichtung F wird als nächster aktueller Knoten ausgewählt und dessen Nachbarknoten mit jeweils der Gesamtgewichtung F ermittelt. Ergeben sich gleiche kleinste Gesamtgewichtungen F für mehrere Nachbarknoten, so werden die Nachbarknoten nacheinander als aktuelle Knoten herangezogen. Danach werden die Nachbarknoten mit der nächst höheren Gesamtgewichtung F als aktuelle Knoten herangezogen, und zwar in der Reihenfolge ihrer zunehmenden Gesamtgewichtung F. Dies wird solange durchgeführt, bis alle Knoten als aktuelle Knoten herangezogen worden sind, wobei der Zielknoten D4 als letzter aktueller Knoten betrachtet wird. Danach wird ausgehend vom Zielknoten D4 schrittweise bis hin zum Startknoten A2 der jeweils vorausgegangene Knoten, der als Vorgängerknoten zu der kleinsten Gewichtung F des momentan betrachteten Knotens geführt hat, aufgesucht und als Wegpunkt des gesuchten Fahrwegs ausgegeben. In dem noch nachstehend zu Fig. 2 beschriebenen Ausführungsbeispiel wären beispielhaft die nacheinander gefundenen Vorgängerknoten D3 (da D4 über D3 die kleinste Gesamtgewichtung F=5 erhält), C3 (da D3 über C3 die kleinste Gesamtgewichtung F=4 erhält), B3 (da C3 über B3 die kleinste Gesamtgewichtung F=3 erhält), A3 (da B3 über A3 die kleinste Gesamtgewichtung F=2 erhält) und A2 (da A3 über A2 die kleinste Gesamtgewichtung erhält). Um das Verfahren zu beschleunigen und die Knoten, die zu einer erkennbar höheren Gesamtgewichtung F führen, fortlaufend zu eliminieren, damit sie nicht unnötigerweise erfasst werden müssen, bleiben bei der Betrachtung eines folgenden aktuellen Knotens diejenigen Nachbarknoten außer acht, die zuvor bereits als aktuelle Knoten einer Betrachtung unterzogen worden waren oder deren Gesamtgewichtung größer oder gleich der für diese Nachbarknoten bereits zuvor bestimmten Gesamtgewichtung F ist.

Im zunächst beschriebenen Ausführungsbeispiel werden als Nachbarknoten eines aktuellen Knotens alle Knoten angesehen, die mit dem aktuellen Knoten durch eine Kante verbunden sind. Beispielhaft sind die Nachbarknoten zu dem Startknoten A2 als ersten aktuellen Knoten die Knoten A1, A3 und B2. Für die Bestimmung der Gesamtgewichtung F eines Nachbarknotens wird dessen Entfernung von dem im Startpunkt S liegenden Startknoten A2 herangezogen, wobei die Entfernung des Nachbarknotens zum Startknoten A2 durch einfache Addition der Gesamtgewichtung des aktuellen Knotens mit der Gewichtung der vom aktuellen Knoten zum Nachbarknoten führenden Kante berechnet wird. Im Ausführungsbeispiel haben somit die Nachbarknoten A1, A3 und B2 des aktuellen Knotens A2, der als Startknoten A2 keine Gesamtgewichtung besitzt, jeweils die Gesamtgewichtung F=1. Ist der Nachbarknoten A1 mit der Gesamtgewichtung F=1 ausgewählter aktueller Knoten, so hat der zu dem aktuellen Knoten A1 gehörige Nachbarknoten B1 die Gesamtgewichtung F=1+1=2. Der Nachbarknoten C1 zu dem aktuellen Knoten B1 hat die Gesamtgewichtung F=2+1=3. Wie an dem Beispiel zu erkennen ist, ergibt sich die Gesamtgewichtung F des jeweils aktuellen Knotens stets aus der Aufsummierung aller Gewichtungen der vom Startknoten A2 im Startpunkt S zum aktuellen Knoten aneinandergereihten Kanten, so im Beispiel des aktuellen Knotens C1 die Aufsummierung der Kanten zwischen A2 und A1, zwischen A1 und B1 und zwischen B1 und C1.

Zur übersichtlichen Abarbeitung aller Knoten im Maschennetz und Bestimmung ihrer Gesamtgewichtung F werden zwei leere Listen I und II erstellt, in die die betrachteten Knoten sukzessive eingetragen werden. In Liste I werden dabei die noch zu betrachtenden Knoten und in Liste II die bereits betrachteten Knoten eingetragen. In Fig. 2 sind die Listen I und II mit Eintragung der Knoten und deren Gesamtgewichtung F dargestellt. Zunächst wird der Startknoten A2 als erster aktueller Knoten in die Liste I eingetragen und alle Nachbarknoten und deren Gesamtgewichtung bestimmt. Dies sind die Nachbarknoten A1, A3, B2 mit jeweils der Gesamtgewichtung F=1. Wie bereits erwähnt, wird von diesen Nachbarknoten der Nachbarknoten mit der kleinsten Gesamtgewichtung F als nächster aktueller Knoten ausgewählt und in die Liste II als ausgewählter Knoten eingetragen (Spalte "Auswahl des aktuellen Knotens" in Liste II), sowie in der Liste II dem ausgewählten Knoten der vorangegangene Knoten, über den die Gesamtgewichtung F des ausgewählten Knotens bestimmt worden ist, als Vorgänger knoten zugeordnet (Spalte "Vorgängerknoten" in Liste II). Da alle drei Knoten A1, A3, B2 die gleiche kleinste Gesamtgewichtung F=1 aufweisen, werden sie alle in Zuordnung zu dem Vorgängerknoten A2 in die Liste II eingetragen und nacheinander jeweils als aktuelle Knoten herangezogen. Zum aktuellen Knoten A1 ergeben sich die Nachbarknoten A2, B1 (Liste I). Da der Nachbarknoten A1 bereits aktueller Knoten gewesen ist, wird er außer acht gelassen. Für den Nachbarknoten B1 ergibt sich die Gesamtgewichtung F=2. Der Nachbarknoten B1 wird ausgewählt und mit seiner Gesamtgewichtung F=2 und dem Vorgängerknoten A1 in Liste II eingetragen. In gleicher Weise wird mit den ausgewählten Knoten A3 und B2 (Liste II) als aufeinanderfolgende aktuelle Knoten verfahren. Beim aktuellen Knoten A3 ergeben sich die Nachbarknoten A2, A4, B3 (Liste I). Der bereits betrachtete Knoten A2 wird außer acht gelassen. Für den Nachbarknoten A4 ergibt sich die Gesamtgewichtung F=11 und für den Nachbarknoten B3 die Gesamtgewichtung F=2. Der Knoten B3 als derjenigen Knoten mit der kleinsten Gesamtgewichtung wird ausgewählt und in die Liste II eingetragen, sowie diesem der Vorgängerknoten A3 zugeordnet. Jetzt wird der ausgewählte Knoten B2 mit der Gesamtgewichtung F=1 als aktueller Knoten betrachtet. Hierzu ergeben sich die Nachbarknoten A2, der als bereits betrachteter aktueller Knoten unbeachtet bleibt, B1 mit der Gesamtgewichtung F=2, B3 mit der Gesamtgewichtung F=2 und C2 mit der Gesamtgewichtung F=11. Die Nachbarknoten B1 und B3 mit der kleinsten Gesamtgewichtung F=2 bleiben unbeachtet, da diese Nachbarknoten bereits über die Vorgängerknoten A1 bzw. A3 die gleiche Gesamtgewichtung F=2 erhalten haben. Nun werden nacheinander die Knoten B1 und B3 mit der gleichen kleinsten Gesamtgewichtung F=2 als aktuelle Knoten bearbeitet. Dadurch werden drei Nachbarknoten C1, B4, C3 gefunden, die jeweils die gleiche kleinste Gesamtgewichtung F=3 aufweisen und wiederum nacheinander abgearbeitet werden. Die Nachbarknoten A1, A3, B2 werden außer acht gelassen, da sie bereits als aktuelle Knoten betracht worden sind. Dieser Prozess wird solange fortgesetzt, bis bei der Betrachtung des aktuellen Knotens D3 der Nachbarknoten D4 mit der kleinsten Gesamtgewichtung F=5 als aktueller Knoten ausgewählt und in die Liste II mit Zuordnung des Knotens D3 als Vorgängerknoten eingetragen wird.

Nunmehr werden in Liste II, ausgehend von dem im Zielpunkt Z liegenden Zielknoten D4 als letzter aktueller Knoten, die jeweiligen Vorgängerknoten aufgesucht und als Wegpunkte des gesuchten Fahrwegs ausgegeben. Dieses ist in der Liste II in Fig. 2 durch grau unterlegte Flächen dargestellt. Ausgehend von dem Startknoten D4 geben die Vorgängerknoten D3 (zu D4), C3 (zu D3), B3 (zu C3), A3 (zu B3) und A2 als Startpunktknoten (zu A3) den optimalen Fahrweg für das Unterwasserfahrzeug vom Startpunkt S bis zum Zielpunkt Z an. Diese Wegpunkte sind in Fig. 1 durch Schwärzung der Knoten symbolisiert und ergeben den Fahrweg A2→A3→B3→C3→D3→D4 für das Unterwasserfahrzeug.

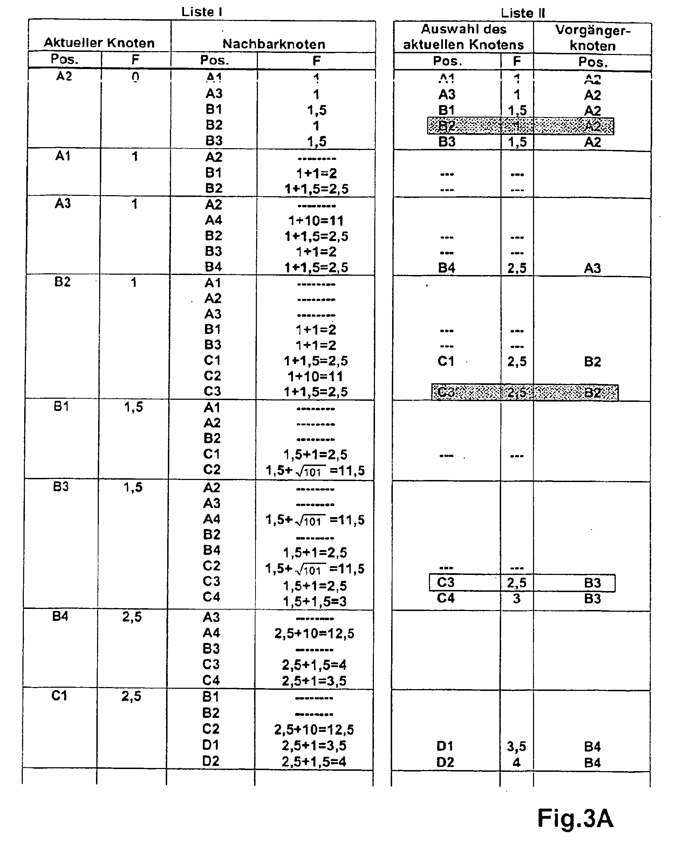

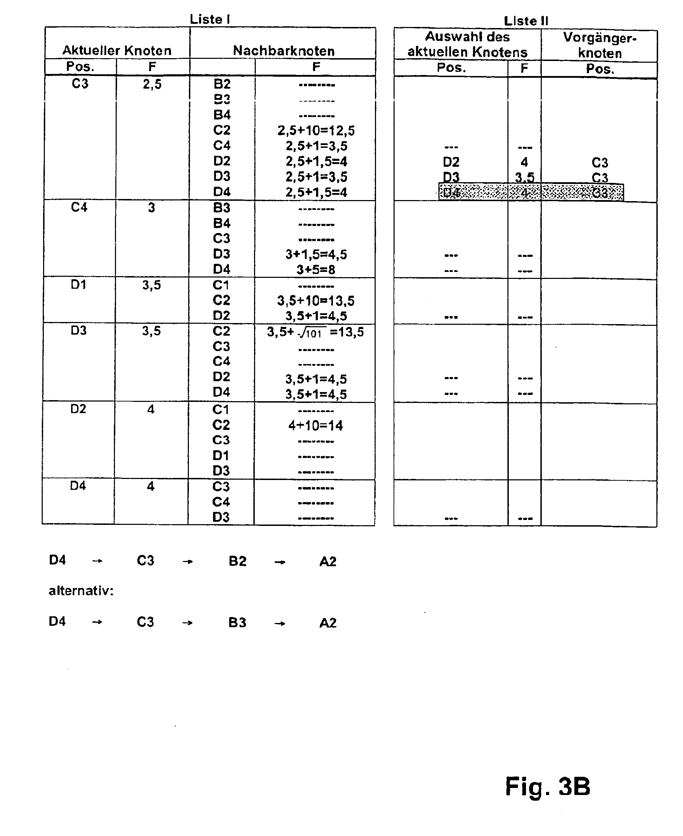

In Fig. 3A und 3B sind Liste I und Liste II für das etwas modifizierte Verfahren dargestellt. Dieses Verfahren unterscheidet sich von dem vorstehend beschriebenen dadurch, dass als Nachbarknoten eines aktuellen Knotens nicht nur diejenigen Knoten, die mit dem aktuellen Knoten durch eine Kante verbunden sind, sondern auch diejenigen Knoten, die ihrerseits jeweils mit zwei dieser Knoten durch je eine Kante verbunden sind, angesehen werden. Beispielhaft gehören zu dem aktuellen Knoten A2 im Startpunkt S wie bisher die durch eine Kante mit dem aktuellen Knoten A2 verbundenen Nachbarknoten A1, A3 und B2 und zusätzlich die Nachbarknoten B1 und B3, von denen B1 über je eine Kante mit A1 und B2 und B3 über je eine Kante mit A3 und B2 verbunden ist. Der zwischen den Nachbarknoten B1 und dem aktuellen Knoten A2 einerseits und dem Nachbarknoten B3 und dem aktuellen Knoten A2 andererseits sich erstreckenden Maschen-Diagonalen - im folgenden kurz Diagonale genannt - werden zwecks Berechnung der Gesamtgewichtung F der Knoten eine Gewichtung zugeordnet, die sich aus der Wurzel der Summe der Quadrate der Gewichtungen der die Diagonale begrenzenden Kanten, also im Beispiel der Kante zwischen A2 und B2 einerseits und B2 und B1 bzw. B2 und B3 andererseits, berechnet. Da die genannten Kanten eine Gewichtung von "1" besitzen wird den Diagonalen, die in Fig. 1 gestrichelt eingezeichnet sind, eine Gewichtung √2≈1,5 zugewiesen. In gleicher Weise werden die Diagonalen in den übrigen Maschen gewichtet. Beispielhaft haben danach die Diagonale von B1 nach C2 und die Diagonale von B2 nach A4 jeweils die Gewichtung √101≈10.

Der Vorgang der Berechnung der Gesamtgewichtung F für die Nachbarknoten zu einem aktuellen Knoten mit außer acht lassen der zuvor bereits als aktuelle Knoten einer Betrachtung unterzogenen Nachbarknoten, die Auswahl des Nachbarknotens oder der Nachbarknoten mit der kleinsten Gesamtgewichtung als den oder die nächsten aktuellen Knoten und die Abspeicherung der als nächste aktuelle Knoten ausgewählten Knoten in Verbindung mit ihren Vorgängerknoten in der Liste II wird in gleicher Weise durchgeführt, wie dies vorstehend zu Fig. 2 beschrieben worden ist. In Fig. 3A und 3B sind hierzu die Liste 1 und Liste II dargestellt und mit den entsprechenden Eintragungen von aktuellen Knoten, Nachbarknoten, Gesamtgewichtung F und Vorgängerknoten versehen. Für den Startknoten A2 ergeben sich aus Fig. 1 die Nachbarknoten A1 mit der Gesamtgewichtung F=1, A3 mit der Gesamtgewichtung F=1, B1 mit der Gesamtgewichtung F=1,5, B2 mit der Gesamtgewichtung F=1 und B3 mit der Gesamtgewichtung F=1,5. Alle diese Nachbarknoten werden als aktuelle Knoten ausgewählt und mit ihrer Gesamtgewichtung F in der Liste II (Spalte: Auswahl des aktuellen Knotens) eingetragen und in der Liste II diesen Knoten der Vorgängerknoten A2 (Spalte: Vorgängerknoten) zugeordnet. Die ausgewählten Knoten werden in der Reihenfolge ihrer Kleinheit, also zuerst der Knoten mit der kleinsten Gesamtgewichtung F, nacheinander als aktuelle Knoten betrachtet und zu diesen die Nachbarknoten und deren Gesamtgewichtung F bestimmt. Wie in Liste II eingetragen ist, ergibt sich eine Reihenfolge der zu betrachtenden aktuellen Knoten A1 mit der Gesamtgewichtung F=1, A3 mit der Gesamtgewichtung F=1, B2 mit der Gesamtgewichtung F=1, B1 mit der Gesamtgewichtung F=1,5 und B3 mit der Gesamtgewichtung F=1,5. Zu dem zuerst betrachteten aktuellen Knoten A1 gehören die Nachbarknoten A2, der außer acht gelassen wird, da er bereits als aktueller Knoten betrachtet worden ist, der Nachbarknoten B1 mit der Gesamtgewichtung F=2 und der Nachbarknoten B3 mit der Gesamtgewichtung F=2,5. Diese Nachbarknoten B1 und B2 mit einer über den Vorgängerknoten A2 sich ergebenden Gesamtgewichtung F=2 bzw. F=2,5 werden ebenfalls außer acht gelassen, da diese Knoten als Nachbarknoten von A2 bereits eine über A2 erhaltene Gesamtgewichtung F=1,5 bzw. F=1 besitzen, die kleiner ist als ihre neu über A1 erhaltene Gesamtgewichtung F. Für den aktuellen Knoten A3 ergeben sich die Nachbarknoten A2, A4, B2, B3, B4. Der Nachbarknoten A2 wird als bereits betrachteter aktueller Knoten außer acht gelassen. Für die anderen Nachbarknoten A4, B2, B3, B4 berechnet sich die Gesamtgewichtung F zu 11 bzw. 2,5 bzw. 2, bzw. 2,5. Die Nachbarknoten B2 und B3 bleiben wieder unberücksichtigt, da ihre bereits über A2 errechnete Gesamtgewichtung mit F=1 bzw. F=1,5 wiederum kleiner ist als ihre über A3 berechnete Gesamtgewichtung mit F=2,5 bzw. F=2. Der Nachbarknoten mit der kleinsten Gesamtgewichtung ist B4 mit der Gesamtgewichtung F=2,5, der mit Zuordnung seines Vorgängerknotens A3 in Liste II eingetragen wird.

Der vorstehend beschriebene Prozess wird solange fortgesetzt, bis am Ende der Liste II der Zielknoten D4 als aktueller Knoten mit der kleinsten Gesamtgewichtung F ausgewählt wird. Werden nunmehr wiederum in Liste II, ausgehend von dem im Zielpunkt Z liegenden Zielknoten D4 als letzen aktuellen Knoten in rekursiver Weise die Vorgängerknoten sukzessive aufgesucht, was in Fig. 3 wiederum durch die grau unterlegten Felder markiert ist, so ergeben die Knoten D4, C3, B2 und A2 als Wegpunkte für die optimale Fahrstrecke und der Fahrweg des Unterwasserfahrzeugs vom Startpunkt S führt über die Knoten B2 und C3 zum Zielpunkt Z. Die vom Unterwasserfahrzeug zu durchfahrenden Knoten sind in Fig. 1 durch Kreuze symbolisiert.

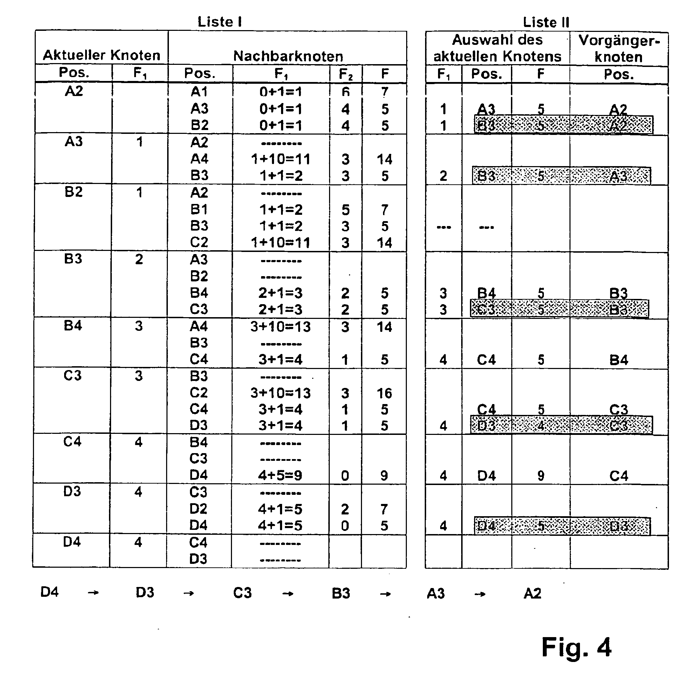

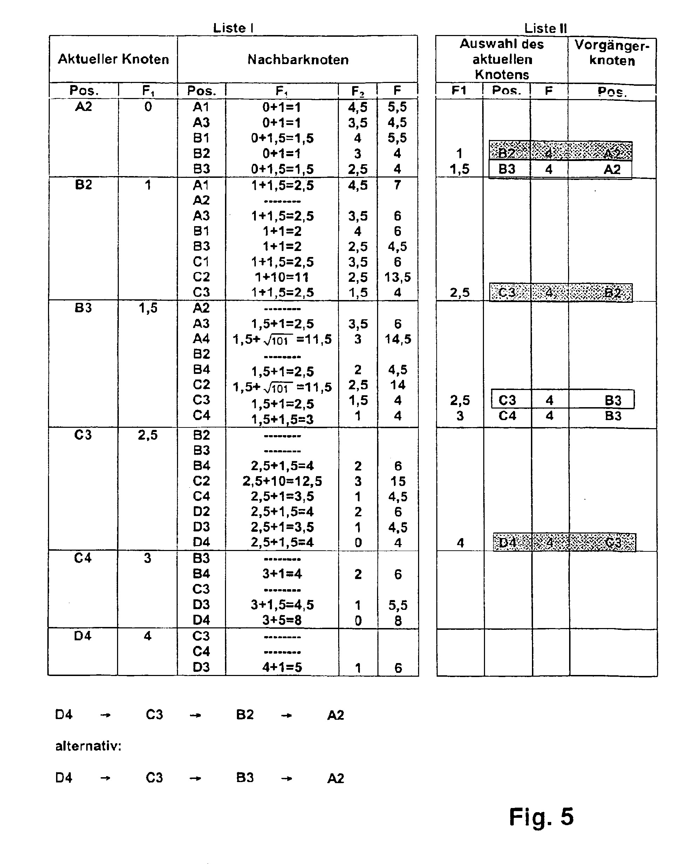

Die in Fig. 4 und 5 jeweils durch die Erstellung der Listen I und II illustrierten Verfahren unterscheiden sich von den zu Fig. 2 bzw. Fig. 3 beschriebenen Verfahren nur durch eine Modifikation des Algorithmus zur Berechnung der Gesamtgewichtung F für die Nachbarknoten. Anders als bei den vorstehend beschriebenen Verfahren wird für die Bestimmung der Gesamtgewichtung F eines Nachbarknotens nicht nur dessen Entfernung zu dem im Startpunkt S liegenden Startknoten A2, sondern auch noch die Entfernung des Nachbarknotens zum Zielknoten D4 berücksichtigt. Hierzu wird die Entfernung des Nachbarknotens zum Startknoten A2 durch einen ersten Summanden F₁ und die Entfernung des Nachbarknotens zum Zielknoten D4 durch einen zweiten Summanden F₂ erfasst und die Gesamtgewichtung F durch Addition der beiden Summanden F₁ und F₂ berechnet. Der erste Summand F₁ eines Nachbarknotens wird dabei in gleicher Weise berechnet wie die Gesamtgewichtung eines Nachbarknotens in den Verfahrensvarianten gemäß Fig. 2 und 3, d.h., dass zur Erlangung des ersten Summanden F₁ eines Nachbarknotens zu dem ersten Summanden des die Nachbarschaft dieses Nachbarknotens begründeten aktuellen Knotens die Gewichtung der vom aktuellen Knoten zum Nachbarknoten führenden Kante hinzuaddiert wird. Der zweite Summand wird durch Addition der Gewichtungen der Knoten und/oder Diagonalen geschätzt, die aneinandergereiht die kürzeste Wegstrecke vom betrachteten Nachbarknoten zum Zielknoten ergeben, wobei - unabhängig von vorhandenen Hindernissen mit hohen Gewichtungen - die Gewichtung einer Kante mit der kleinsten Gewichtung, z. B. "1", und die Gewichtung einer Diagonalen mit der aus der Wurzel der Summe der Quadrate der kleinsten Gewichtung zweier die Diagonale begrenzenen Kanten sich ergebenden Gewichtung, z.B. √1² + 1² = √2≈ 1,5, angenommen wird.
Beispielhaft haben bei der Verfahrensvariante, bei der als Nachbarknoten nur die mit dem aktuellen Knoten durch Kanten verbundenen Knoten angesehen werden (Fig. 4), die Nachbarknoten A1, A3 und B2 zu dem Startknoten A2 als ersten aktuellen Knoten den ersten Summanden F₁=1, da alle drei Kanten die Gewichtung "1" besitzen und der aktuelle Knoten als Startknoten A2 keine Gesamtgewichtung F besitzt. Der zweite Summand für den Nachbarknoten A1 bestimmt sich aus der Summe der Gewichtungen der bis zum im Zielpunkt Z sich befindlichen Zielknoten D4 aneinandergereihten Kanten zu F₂=6. Der Nachbarknoten A3 hat als zweiten Summanden F₂=4, und der Nachbarknoten B2 hat als zweiten Summanden F₂=4. Der weitere Vorgang ist wie zu Fig. 2 beschrieben. Die Nachbarknoten mit der kleinsten Gesamtgewichtung werden als ausgewählte Knoten einerseits in die Liste II in Zuordnung zu dem Vorgängerknoten eingetragen und als nächste aktuelle Knoten herangezogen. In der Liste II der Fig. 4 werden daher die Nachbarknoten A3 und B2 mit der gleichen kleinsten Gesamtgewichtung F=5 in die Liste II eingetragen und diesen der Vorgängerknoten A2 zugeordnet. Da beide ausgewählte Nachbarknoten A3 und B2 die gleiche kleinste Gesamtgewichtung F=5 aufweisen, werden sie nacheinander abgearbeitet.

Wird als nächster aktueller Knoten der Knoten A3 betrachtet, so ergeben sich die Nachbarknoten A2, A4 und B3, wobei sich für den Nachbarknoten A4 ein erster Summand F₁ aus dem ersten Summanden des aktuellen Knotens A3 (F₁=1) und der der Kante zugeordneten Gewichtung 10 zu F₁=11 berechnet. Der zweite Summand wird mit F₂=3 ermittelt, so dass sich eine Gesamtgewichtung F für den Nachbarknoten A4 von F=14 ergibt.

Demgegenüber wird für den Nachbarknoten B3 eine kleinere Gesamtgewichtung F=5 berechnet, so dass nunmehr der Nachbarknoten B3 mit der kleinsten Gesamtqewichtung in die Liste II in Zuordnung zu seinem Vorgängerknoten A3 eingetragen und als nächster aktueller Knoten herangezogen wird. Dieses wird solange fortgesetzt, bis der im Zielpunkt Z liegende Zielknoten D4 als letzter aktueller Knoten in die Liste II eingetragen wird. In gleicher Weise wie bereits vorstehend beschrieben, werden in der Liste II ausgehend von dem Zielknoten D4 rekursiv jeweils die Vorgängerknoten aufgesucht, die sich zu D3, C3, B3, A3 und dem Startknoten A2 ergeben. Diese Knoten bilden die Wegpunkte für die Wegstrecke vom Startpunkt S bis zum Zielpunkt Z. Als optimaler Fahrweg ergibt sich wie mit dem in Fig. 2 illustrierten Verfahren wieder die Knotenstrecke A2, A3, B3, C3, D3, D4.

Wie die Kürze der Listen I und II in Fig. 4 im Vergleich zu den Listen I und II in Fig. 2 zeigt, verringert sich der Aufwand der zu betrachten Knoten im Netzwerk erheblich.

Bei der Verfahrensvariante, bei der als Nachbarknoten zusätzlich auch die dem aktuellen Knoten über eine Maschen-Diagonale gegenüberliegenden Knoten angesehen werden (Fig. 5) haben die Nachbarknoten A1, A3, B1, B2, B3 zum Startknoten A2 als erster aktueller Knoten den ersten Summanden F₁=1, da alle drei Knoten die Gewichtung "1" besitzen und der aktuelle Knoten als Startknoten A2 die Gesamtgewichtung "0" besitzt. Der zweite Summand F₂ bestimmt sich aus der Summe der Gewichtungen der Kanten und Diagonalen, die aneinandergesetzt die kürzeste Wegstrecke zum Zielknoten D4 ergeben. Für den Nachbarknoten A1 wäre dies die Summe der Gewichtungen der Diagonalen, die von A1 über B1, C3 zu D4 führen. Da jede Diagonale mit einer Gewichtung von 1,5 belegt ist, ergibt sich F₂=1,5+ + 1,5 + 1,5 = 4,5. Für den Nachbarknoten A3 setzt sich die kürzeste Wegstrecke zum Zielknoten D4 aus der Kante von A3 nach B3 (Gewichtung 1), der Kante von B3 nach C3 (Gewichtung 1) und der Diagonalen von C3 nach D4 (Gewichtung 1, 5) zusammen. Damit ergibt sich F₂=1+1+1, 5=3, 5. Selbstverständlich kann die kürzeste Wegstrecke auch von A3 über B4 nach C4 oder B3 und C4 führen. In allen Fällen ergibt sich nach dem Vorgesagten der zweite Summand F₂=3,5. Die zweiten Summanden F₂ für die weiteren Nachbarknoten B1, B2 und B3 lassen sich aus Fig. 5 entnehmen, ebenso die Gesamtgewichtung aller Nachbarknoten.

Ebenso wie bei den vorstehend beschriebenen Verfahrensvarianten werden jeweils die betrachteten Nachbarknoten, die die kleinste Gesamtgewichtung aufweisen, ausgewählt und in Zuordnung zu den Vorgängerknoten in Liste II eingetragen und anschließend als aktuelle Knoten abgearbeitet. Die Nachbarknoten B2 und B3 besitzen die kleinste Gesamtgewichtung und werden in Liste II in Zuordnung zu dem Vorgängerknoten A2 eingetragen und nachfolgend bearbeitet. Bei der Abarbeitung des aktuellen Knotens B2 ergibt sich der Knoten C3 mit der kleinsten Gesamtgewichtung und bei der Abarbeitung des aktuellen Knotens B3 die Knoten C3 und C4 mit der kleinsten Gesamtgewichtung, die wiederum nacheinander als aktuelle Knoten herangezogen werden, bis der Zielknoten D4 als aktueller Knoten erscheint.

Das rekursive Aufsuchen der Vorgängerknoten in Liste II, ausgehend von dem Startknoten D4 als letzten aktuellen Knoten, ergibt die die Wegpunkte markierenden Knoten D4, C3, B2 und A2 und alternativ die Knoten D4, C3, B3 und A2. Wie aus Fig. 1 ersichtlich ist, ergibt sich damit der optimale Fahrweg für das Unterwasserfahrzeug vom Startpunkt S zum Zielpunkt Z vom Startknoten A1 über die Knoten B2 und C3 oder B3 und C3 zum Zielknoten D4, wie bei der mit Fig. 3 illustrieren Verfahrensvariante.

## Patentansprüche

1. Verfahren zur Bestimmung eines Fahrwegs für ein Unterwasserfahrzeug in einem Seegebiet zwischen einem Start- und einem Zielpunkt (S, Z) des Unterwasserfahrzeugs, mit folgenden Verfahrensschritten :
- einem Start- und Zielpunkt (S, Z) erfassenden Ausschnitt einer Seekarte mit kartographisch verzeichneten Tiefenangaben wird ein Netz aus durch Kanten begrenzten Maschen, die durch Knoten (A1 ... D4) an den Kantenenden miteinander verknüpft sind, so zugeordnet, dass jeweils ein Knoten (A2, D4) im Start- und Zielpunkt (S, Z) liegt,
- jeder zu einem Knoten (A1 ... D4) führenden Kante wird eine Gewichtung zugewiesen, die aus einer Tiefenangabe abgeleitet ist, welche in der Seekarte zwischen den durch die Kanten verbundenen beiden Knoten (A1 ... D4) verzeichnet ist,
- ausgehend von dem im Startpunkt (S) liegenden Startknoten (A2) als ein zuerst betrachteter aktueller Knoten werden Nachbarknoten des aktuellen Knotens jeweils eine aus der Gewichtung der Kanten abgeleitete Gesamtgewichtung (F) zugeordnet und dies solange durchgeführt, bis alle Knoten (A1 ... D4) als aktuelle Knoten herangezogen worden sind, und
- ausgehend von dem im Zielpunkt (Z) liegenden Zielknoten (D4) wird schrittweise bis hin zum Startknoten (A2) der jeweils vorausgegangene Knoten, der als Vorgängerknoten zu der kleinsten Gewichtung (F) des Knotens geführt hat, aufgesucht und als Wegpunkt des gesuchten Fahrwegs ausgegeben.

2. Verfahren nach Anspruch 1, **dadurch gekennzeichnet, dass** zur Ableitung der den Kanten zugeordneten Gewichtungen ein Vorgabewert für eine gewünschte Lauftiefe des Unterwasserfahrzeugs mit den in der Seekarte verzeichneten Tiefenangaben verglichen wird und dass bei Unterschreitung der Tiefenangabe eine geringe Gewichtung und bei Überschreiten der Tiefenangabe eine hohe Gewichtung den jeweiligen Kanten zugeordnet wird.

3. Verfahren nach Anspruch 1 oder 2, **dadurch gekennzeichnet, dass** im Bereich von gegen das Befahren gesperrten Schutz- und Gefahrenzonen liegenden Kanten eine.hohe Gewichtung zugeordnet wird.

4. Verfahren nach einem der Ansprüche 1 bis 3, **dadurch gekennzeichnet, dass** innerhalb einer aktuellen Bedrohungszone liegenden Kanten, in der eine akute Gefährdung oder Detektionsgefahr für das Unterwasserfahrzeug besteht, z.B. innerhalb des Detektionsbereichs eines im Zielpunkt (Z) vorhandenen Sonars, eine mittlere Gewichtung zugeordnet wird.

5. Verfahren nach einem der Ansprüche 1. bis 4, **dadurch gekennzeichnet, dass** die Nachbarknoten in der Rangfolge der Kleinheit ihrer Gesamtgewichtungen (F) nacheinander als aktuelle Knoten herangezogen werden und dass bei der Betrachtung eines aktuellen Knotens diejenigen Nachbarknoten außer acht gelassen werden, die zuvor bereits als aktuelle Knoten einer Betrachtung unterzogen worden waren oder deren Gesamtgewichtung (F) größer oder gleich der für diesen Knoten bereits zuvor bestimmten Gesamtgewichtung (F) ist.

6. Verfahren nach einem der Ansprüche 1 bis 5, **dadurch gekennzeichnet, dass** als Nachbarknoten eines aktuellen Knotens alle Knoten angesehen werden, die mit dem aktuellen Knoten durch eine Kante verbunden sind.

7. Verfahren nach einem der Ansprüche 1 bis 5, **dadurch gekennzeichnet, dass** als Nachbarknoten eines aktuellen Knotens diejenigen Knoten, die mit dem aktuellen Knoten durch eine Kante verbunden sind, und diejenigen Knoten, die ihrerseits jeweils mit zwei der vorgenannten Knoten durch je eine Kante verbunden sind, angesehen werden.

8. Verfahren nach Anspruch 7, **dadurch gekennzeichnet, dass** vom aktuellen Knoten zu den Nachbarknoten verlaufenden Diagonalen jeweils eine Gewichtung zugeordnet wird, die entweder aus der Wurzel der Summe der Gewichtungsquadrate der die Diagonale begrenzenden Kanten berechnet oder als fester Wert vorgegeben wird, der größer ist als die kleinste Gewichtung der die Diagonale begrenzenden Kanten.

9. Verfahren nach einem der Ansprüche 1 bis 8, **dadurch gekennzeichnet, dass** für die Bestimmung der Gesamtgewichtung eines Nachbarknotens dessen Entfernung von dem im Startpunkt (S) liegenden Startknoten (A2) berücksichtigt wird.

10. Verfahren nach Anspruch 9, **dadurch gekennzeichnet, dass** die Entfernung des Nachbarknotens zum Startknoten (A2) durch Addition der Gesamtgewichtung (F) des aktuellen Knotens mit der Gewichtung der vom aktuellen Knoten zum Nachbarknoten führenden Kante berechnet wird, wobei die Gesamtgewichtung (F) des aktuellen Knotens die Aufsummierung aller Gewichtungen der vom Startknoten (A2) zum aktuellen Knoten aneinandergereihten Kanten und/oder Diagonalen ist.

11. Verfahren nach einem der Ansprüche 1 bis 8, **dadurch gekennzeichnet, dass** für die Bestimmung der Gesamtgewichtung eines Nachbarknotens dessen Entfernung zu dem im Startpunkt (S) liegenden Startknoten (A2) und dessen Entfernung zu dem im Zielpunkt (Z) liegenden Zielknoten (D4) berücksichtigt werden.

12. Verfahren nach Anspruch 11, **dadurch gekennzeichnet, dass** die Entfernung des Nachbarknotens zum Startknoten (A2) durch einen ersten Summanden (F₁) und die Entfernung des Nachbarknotens zum Zielknoten (D4) durch einen zweiten Summanden (F₂) erfasst und die Gesamtgewichtung (F) durch Addition beider Summanden (F₁, F₂) berechnet wird.

13. Verfahren nach Anspruch 12, **dadurch gekennzeichnet, dass** der erste Summand (F₁) eines Nachbarknotens durch Addition des ersten Summanden (F₁) des aktuellen Knotens und der Gewichtung der vom aktuellen Knoten zum Nachbarknoten führenden Kante gebildet wird, wobei der erste Summand (F₁) des aktuellen Knotens die Aufsummierung aller Gewichtungen der vom Startknoten (A2) zum aktuellen Knoten aneinandergereihten Kanten und/oder Diagonalen ist, und dass der zweite Summand (F₂) durch Addition der Gewichtungen der Kanten und/oder Diagonalen bestimmt wird, die aneinandergereiht die kürzeste Wegstecke zwischen dem Nachbarknoten und dem Zielknoten (D4) ergeben, wobei die Gewichtung einer Kante mit der kleinsten Gewichtung und die Gewichtung der Diagonalen mit der Gewichtung angenommen wird, die sich aus der Wurzel der Summe der Quadrate zweier der kleinsten Kantengewichtungen ergibt.

14. Verfahren nach einem der Ansprüche 5 bis 13, **dadurch gekennzeichnet, dass** jeder als aktueller Knoten ausgewählte Nachbarknoten in Zuordnung zu seiner Gesamtgewichtung (F) und in Zuordnung zu dem Vorgängerknoten, der als vorheriger aktueller Knoten die Nachbarschaft des Knotens begründet hat, abgespeichert wird und dass der gesuchte Fahrweg aus der rekursiven Reihenfolge der abgespeicherten Vorgängerknoten angegeben wird.

## Claims

1. A method for determining a route for an underwater vehicle in a sea area between a starting point and destination point (S, Z) of the underwater vehicle, with the following method steps:
- a network comprising grids which are bounded by edges and are linked to one another by nodes (A1 ... D4) at the edge ends is associated with a section, which covers a starting point and destination point (S, Z), of a sea chart with cartographically annotated depth indications, such that one node a2, D4) is in each case located at the starting point and destination point (S, Z),
- each edge which leads to a node (A1 ... D4) is assigned a weight which is derived from a depth indication which is annotated between the two nodes (A1 ... D4) which are connected by the edges on the sea chart,
- on the basis of the starting node (A2), which is located at the starting point (S), as a first current node under consideration, neighboring nodes to the current node are each allocated an weigh (F) which is derived from the weight of the edges, and this process is continued until all the nodes (A1 ... D4) have been used as current nodes,
and
- on the basis of the destination node (D4) which is located at the destination point (Z), the respectively preceding node which has led as a predecessor node to the lowest weight (F) of the node is searched for step by step as far as the starting node and is output as a waypoint on the sought route.

2. The method as claimed in claim 1, **characterized in that**, in order to derive the weights which are associated with the edges, a preset value for a desired running depth of the underwater vehicle is compared with the depth indications annotated on the sea chart, and **in that** a low weight is associated with the respective edge if the depth indication is undershot, and a high weight is associated with the respective edge if the depth indication is overshot.

3. The method as claimed in claim 1 or 2, **characterized in that** a high weight is allocated to edges which are located in the area or protected and danger zones which must not be entered.

4. The method as claimed in one of claims 1 to 3, **characterized in that** edges which are located within a current threat zone and in which there is an acute hazard or risk of detection for the underwater vehicle, for example within the detection area of a sonar at the destination point (Z), are allocated a medium weight.

5. The method as claimed in one of claims 1 to 4, **characterized in that** the neighboring nodes are used successively as current nodes in the ranking of their overall weights (F) starting from the smallest, and **in that**, when considering a current node, those neighboring nodes are ignored which have previously already been considered as current nodes or whose overall weight (F) is greater than or equal to the overall weight (F) that has already previously been determined for this node.

6. The method as claimed in one of claims 1 to 5, **characterized in that** all nodes which linked to the current node by an edge are regarded as neighboring nodes to a current node.

7. The method as claimed in one of claims 1 to 5, **characterized in that** those nodes which are linked to the current node by an edge and those nodes which are themselves each linked to two of the abovementioned nodes by a respective edge are regarded as neighboring nodes to a current node.

8. The method as claimed in claim 7, **characterized in that** diagonals which run from the current node to the neighboring nodes are each allocated a weight which is either calculated from the square root of the sum of the squares of the weights of the edges which bound the diagonal, or is preset as a fixed value which is greater than the lowest weight of the edges which bound the diagonal.

9. The method as claimed in one of claims 1 to 8, **characterized in that** the distance of a neighboring node from the starting node (A2) which is located at the starting point (S) is considered for determining the overall weight of the neighboring node.

10. The method as claimed in claim 9, **characterized in that** the distance of the neighboring node from the starting node (A2) is calculated by addition of the overall weight (F) of the current node to the weight of the edge which leads from the current node to the neighboring node, with the overall weight (F) of the current node being the addition of all the weights of the edges and/or diagonals in the sequence from the starting node (A2) to the current node.

11. The method as claimed in one of claims 1 to 8, **characterized in that** the distance of a neighboring node to the starting node (A2) which is located at the starting point (S) and the distance of this neighboring node to the destination node (D4) which is located at the destination point (Z) are considered for determining the overall weight of the neighboring node.

12. The method as claimed in claim 11, **characterized in that** the distance of the neighboring node from the starting node (A2) is recorded by a first summand (F₁), and the distance of the neighboring node from the destination node (D4) is recorded by a second summand (F₂), and the overall weight (F) is calculated by addition of the two summands (F₁, F₂).

13. The method as claimed in claim 12, **characterized in that** the first summand (F₁) of a neighboring node is formed by addition of the first summand (F₁) of the current node and the weight of the edge which leads from the current node to the neighboring node, with the first summand (F₁) of the current node being the addition of all the weights of the edges and/or diagonals in the sequence from the starting node (A2) to the current node, and **in that** the second summand (F₂) is determined by addition of the weights of the edges and/or diagonals which result in sequence in the shortest route distance between the neighboring node and the destination node (D4), with the weight of an edge with the lowest weight and the weight of the diagonal with the weight which results from the square root of the sum of the squares of two of the lowest edge weights being assumed.

14. The method as claimed in one of claims 5 to 13, **characterized in that** each neighboring node which is chosen as a current node is stored associated with its overall weight (F) and associated with the predecessor node which, as a previous current node, has justified the neighborhood of the node, and **in that** the sought route is indicated from the recursive sequence of the stored predecessor nodes.

## Revendications

1. Procédé pour déterminer une trajectoire pour un véhicule sous-marin dans un domaine maritime entre un point de départ et un point de destination (S, Z) du véhicule sous-marin, comprenant les étapes suivantes :
- un réseau composé de mailles délimitées par des bords, lesquelles sont reliées entre elles par des noeuds (A1 ... D4) au niveau des extrémités des bords, est associé à une portion d'une carte maritime, comprenant des indications de profondeur dessinées sous forme cartographique, englobant un point de départ et un point de destination (S, 2) de telle sorte qu'un noeud (A2, D4) se trouve à chaque fois dans le point de départ et le point de destination (S, Z ,
- un poids est attribué à chacun des bords qui mène à un noeud (A1 ... D4), lequel est dérivé d'une indication de profondeur qui est dessinée sur la carte maritime entre les deux noeuds (A1 ... D4) reliés par les bords,
- en partant du noeud de départ (A2) qui se trouve au point de départ (S) en tant que premier noeud actuel d'abord pris en considération, un poids total (F) dérivé du poids des bords est à chaque fois attribué aux noeuds voisins du noeud actuel et cette opération est poursuivie jusqu'à ce que tous les noeuds (A1 .. D4) aient été utilisés comme noeud actuel, et
- en partant du noeud de destinatination (D4) qui se trouve au point de destination (Z), le noeud précédent qui, en tant que noeud précédent, a à chaque fois donné lieu au poids (F) le plus petit du noeud, est recherché pas à pas jusqu'au noeud de départ (A2, puis délivré comme point de trajet pour le trajet recherché.

2. Procédé selon la revendication 1, **caractérisé en ce que** pour dériver les poids attribués aux bords, une valeur prescrite pour une profondeur de déglacement souhaitée du véhicule sous-marin est comparée avec les indications de profondeur dessinées sur la carte maritime et **en ce qu'**un poids faible est attribué aux bords correspondants en cas de franchissement vers le bas de l'indication de profondeur et un poids élevé en cas de franchissement vers le haut de l'indication de, profondeur.

3. Procédé selon la revendication 1 ou 2, **caractérisé en ce qu'**un poids élevé est attribué dans la zone des bords qui se trouvent dans les zones protégées et dangereuses fermées à la circulation.

4. Procédé selon l'une des revendications 1 à 3, **caractérisé en ce qu'**un poids moyen est attribué aux bords qui se trouvent à l'intérieur l'une zone de menace actuelle dans laquelle il existe une mise en danger urgente ou un risque de détection pour le véhicule sous-marin, par exemple à l'intérieur de la zone de détection d'un sonar présent au point de destination (Z).

5. Procédé selon l'une des revendications 1 à 4, **caractérisé en ce que** les noeuds voisins sont utilisés l'un après l'autre en tant que noeud actuel dans l'ordre de petitesse de leurs poids totaux (F) et **en ce que** lors de la prise en considération d'un noeud actuel, ne sont pas pris en considération les noeuds voisins qui avaient déjà été considérés précédemment en tant que noeuds actuels ou dont le poids total (F) est supérieur ou égal au poids total (F) déjà déterminé précédemment pour ces noeuds.

6. Procédé selon l'une des revendications 1 à 5, **caractérisé en ce que** sont considères comme noeuds voisins d'un noeud actuel tous les noeuds qui sont reliés avec le noeud actuel par un bord.

7. Procédé selon l'une des revendications 1 à 5, **caractérisé en ce que** sont considérée comme noeuds voisins d'un noeud actuel les noeuds qui sont reliés avec le noeud actuel par un bord et les noeuds qui, de leur côté, sont à chaque fois reliés par un bord respectif avec deux des noeuds mentionnés précédemment.

8. Procédé selon la revendication 7, **caractérisé en ce qu'**un poids est à chaque fois associé aux diagonales qui s'étendent du noeud actuel vers les noeuds voisins, lequel est soit calculé à partir de la racine de la somme des carrés des poids des bords qui délimitent la diagonale, soit prédéfini sous forme de valeur fixe qui est supérieure au plus petit poids des bords qui délimitent la diagonale.

9. Procédé selon l'une des revendications 1 à 8, **caractérisé en ce que** pour déterminer le poids total d'un noeud voisin, il est tenu compte de son éloignement du noeud de départ (A2) qui se trouve au point de départ (S) .

10. Procédé selon la revendication 9, **caractérisé en ce que** l'éloignement du noeud voisin du noeud de départ (A2) est calculé en additionnant le poids total (F) du noeud actuel au poids du bord qui mène du noeud actuel au noeud voisin, le poids total (F) du noeud actuel étant l'addition de tous les poids des bords et/ou diagonales alignés les uns à la suite des autres depuis le noeud de départ (A2) jusqu'au noeud actuel.

11. Procédé selon l'une des revendications 1 à 8, **caractérisé en ce que** pour déterminer poids total d'un noeud voisin, il est tenu compte de son éloignement du noeud de départ (A2) qui se trouve au point de départ (S) et de son éloignement du noeud de destination (D4) qui se trouve au point de destination (Z).

12. Procédé selon la revendication 11, **caractérisé en ce que** l'éloignement du noeud voisin du noeud de départ (A2) est déterminé par un premier opérande d'addition (F₁) et l'éloignement du noeud voisin du noeud destinataire (D4) par un deuxième opérande d'addition (F₂) et le poids total (F) est calculé en additionnant les deux opérandes d'addition (F₁, F₂).

13. Procédé selon la revendication 12, **caractérisé en ce que** le premier opérande d'addition (F₁) d'un noeud voisin est formé en additionnant le premier opérande d'addition (F₁) du noeud actuel et le poids du bord qui mène du noeud actuel au noeud voisin, le premier opérande d'addition (F₁) du noeud actuel étant l'addition de tous les poids des bords et/ou diagonales alignés les uns a la suite des autres depuis le noeud de départ (A2) jusqu'au noeud actuel, et **en ce que** le deuxième opérande d'addition (F₂) est déterminé en additionnant les poids des bords et/ou diagonales qui, alignes les uns à la suite des autres, produisent le trajet le plus court entre le noeud voisin et le noeud destinataire (D4), le poids d'un bord étant supposé avec le poids le plus petit et le poids des diagonales avec poids qui est obtenu à partir de la racine de la somme des carrés de deux des plus petits poids des bords.

14. Procédé selon l'une des revendications 5 à 13, **caractérisé en ce que** chacun des noeuds voisins sélectionnés en tant que noeud actuel est enregistré en association avec son poids total (F) et en association avec le noeud précédent qui, en tant que noeud actuel précédent, a motivé le voisinage du noeud, et **en ce que** le trajet recherché est indiqué à partir de la séquence récursive des noeuds précédents mémorisés.
